# EUROPÄISCHE PATENTSCHRIFT

(11) **EP 3 640 499 B1**
(45) Veröffentlichungstag und Bekanntmachung des Hinweises auf die Patenterteilung: **16.03.2022**
(21) Anmeldenummer: 19190859.9
(22) Anmeldetag: 08.08.2019
(51) Int. Cl.: F16G 15/04, F16G 17/00

(54) **KETTENVERKÜRZUNGSKLAUE**
CHAIN SHORTENING BLADE
MÂCHOIRE DE RACCOURCISSEMENT DE CHAÎNE

(30) Priorität: 26.09.2018 DE 102018123793
(43) Veröffentlichungstag der Anmeldung: 22.04.2020
(73) Patentinhaber: Thiele GmbH & Co. KG, 58640 Iserlohn (DE)
(72) Erfinder: Fernholz, Theo, 58706 Menden (DE)
(74) Vertreter: Osterhoff, Utz

(56) Entgegenhaltungen:
- AT-B- 352 486
- GB-A- 2 088 520

## Beschreibung

Die vorliegende Erfindung betrifft ein Kettenverkürzungselement, insbesondere eine Kettenverkürzungsklaue für eine Gliederkette gemäß den Merkmalen im Oberbegriff von Anspruch 1.

Kettenverkürzungsklauen sind aus dem Stand der Technik bekannt, z.B. aus Druckschrift GB 2 088 520. Hierbei werden Gliederketten, zumeist Rundstahlgliederketten, die ineinandergreifende und aufeinanderfolgende stehende und liegende Kettenglieder aufweisen, mithilfe einer solchen Kettenverkürzungsklaue auf die gewünschte Kettenlänge gekürzt.

Dabei wird in der Regel ein liegendes Kettenglied in eine Aufnahmetasche eingelegt und kommt mit seinem Bug, dem äußeren Teil der Rundung, in der Aufnahmetasche zur Anlage. Wird nunmehr in Kettenlängsrichtung eine Zugkraft aufgebracht, so stützt sich der Kettenbug an der Aufnahmetasche ab. Das in Kettenlängsrichtung folgende stehende Kettenglied ist dabei in einem seitlich offenen Schlitz der Aufnahmetasche angeordnet.

Gattungsbildende Verkürzungsklauen sind aus der DE 20 2004 002 161 U1 oder auch der DE 41 15 341 A1 bekannt.

Damit die aufgenommenen Kettenglieder nicht unbeabsichtigterweise aus der Kettenverkürzungsklaue herausfallen oder sich lösen, sind Sicherungselemente bekannt, die die in der Kettenverkürzungsklaue aufgenommenen Kettenglieder sichern.

Zumeist sind jedoch diese Sicherungselemente derart angeordnet, dass entweder zum Einbringen der Kettenglieder in die Verkürzungsklaue erhöhte Kräfte notwendig sind oder auch eine umständliche Lösung des Sicherungsmittels erforderlich ist, um die Kettenglieder aus der Kettenverkürzungsklaue zu entnehmen.

Aufgabe der vorliegenden Erfindung ist es, ausgehend vom Stand der Technik, eine Kettenverkürzungsklaue bereitzustellen, die eine in der Bedienung vereinfachte Sicherungsmöglichkeit aufweist, bei der sowohl das Einhängen von Kettengliedern in die Kettenverkürzungsklaue, als auch die Entnahme von Kettengliedern aus der Kettenverkürzungsklaue vereinfacht ist.

Die zuvor genannte Aufgabe wird erfindungsgemäß mit den Merkmalen im Anspruch 1 gelöst.

Vorteilhafte Ausgestaltungsvarianten der Erfindung sind in den abhängigen Ansprüchen beschrieben.

Das Kettenverkürzungselement, insbesondere die Kettenverkürzungsklaue ist für eine Gliederkette geeignet. Die Kettenverkürzungsklaue weist einen länglichen Basiskörper auf, welcher aus einem Stahlwerkstoff hergestellt ist. An einer Seite bzw. an einem Ende des länglichen Basiskörpers ist eine geschlitzte Aufnahmetasche vorhanden, in welche ein liegendes Kettenglied einsetzbar ist. Der Basiskörper ist hier zur Ausbildung der Aufnahmetasche verbreitert ausgebildet. Das liegende Kettenglied kommt mit seinem Bug, mithin dem äußeren Teil der Rundung jeweils in einem Grund der Aufnahmetasche, seitlich des Schlitzes, zur Anlage. Das in Kettenlängsrichtung auf das liegende Kettenglied folgende stehende Kettenglied ist dann in einem einseitig offenen Schlitz der Aufnahmetasche angeordnet. Die vorliegende Erfindung betrifft somit auch eine Anordnung einer Kettenverkürzungsklaue mit einer Gliederkette bzw. ein Verfahren zum Verkürzen einer Gliederkette.

Auf der der Aufnahmetasche gegenüberliegenden Seite des Basiskörpers ist eine Koppelstelle ausgebildet, beispielsweise ein H-Körper zur Aufnahme eines Stiftes. Auch kann eine zweite Aufnahmetasche, die die gleiche zuvor beschriebene Konfiguration aufweist, auf dieser Seite des Basiskörpers ausgebildet sein.

Erfindungsgemäß zeichnet sich die Kettenverkürzungsklaue nunmehr dadurch aus, dass das stehende Kettenglied von einem Sicherungsstift übergriffen ist und der Sicherungsstift reversibel entgegen einer Federkraft verlagerbar ist, wobei der Sicherungsstift bei Ausführen einer Axialbewegung auch eine Rotationsbewegung ausführt und dadurch eine in dem Sicherungsstift ausgebildete Mulde über dem Schlitz positioniert wird, dergestalt, dass das stehende Kettenglied aus dem Schlitz ziehbar bzw. entnehmbar ist oder aber ein stehendes Kettenglied in den Schlitz einführbar ist.

Erfindungsgemäß bringt diese Ausbildung deutliche Vorteile. Zunächst muss bei Einführen des Kettengliedes in die Aufnahmetasche durch das Kettenglied selbst keine Federkraft überwunden werden, um dieses zu sichern. Die Federkraft zum Eindrücken des Sicherungsstiftes ist deutlich kleiner als eine Federkraft eines Sicherungsmittels im eingangs beschriebenen Stand der Technik. Die aufzubringenden Kräfte zum Einsetzen der Kette in den Schlitz bzw. zur Entnahme der Gliederkette aus dem Schlitz sind somit verringert.

Dadurch, dass der Sicherungsstift gleichzeitig eine Rotationsbewegung ausführt und dadurch eine Mulde in dem Sicherungsstift über dem Schlitz positioniert wird, sowohl durch Axialbewegung, als auch kombiniert durch die Rotationsbewegung, ergeben sich zwei weitere Vorteile. Zum einen ist der axiale Verfahrweg des Sicherungsstiftes gegenüber aus dem Stand der Technik bekannten Anordnungen verkürzt. Es ist somit möglich, dass ein axialer Verfahrweg der kleiner als das Einfache, insbesondere kleiner als 90 %, bevorzugt kleiner als 80% des Nenndurchmessers des aufzunehmenden Kettengliedes ausgebildet ist, dennoch eine verbesserte Sicherungsleistung ermöglicht. Dies ist damit begründet, dass der Sicherungsstift in einer Öffnung immer beidseitig des Schlitzes gelagert ist.

Ferner muss die Mulde insbesondere nicht einen Verfahrweg, der größer als der Nenndurchmesser der Gliederkette ist, in Axialrichtung ausführen, da gleichzeitig die Rotationsbewegung gegeben ist. Hierzu wird der Sicherungsstift bevorzugt um mehr als 50° insbesondere mehr als 60° rotiert, so dass die Mulde in Sicherungsstellung auf einer von dem Schlitz abgewandten Seite angeordnet ist. Ganz besonders bevorzugt wird der Sicherungsstift um 60 bis 120°, insbesondere 70 bis 110°, besonders bevorzugt 80 bis 100° und ganz besonders bevorzugt um etwa 90° rotiert. Der Sicherungsstift kann jedoch auch um bis zu 180° rotiert werden. Ein axialer Verfahrweg muss somit nicht mindestens die Hälfte der Kettenglieder überdecken, mithin mindestens 50 % der Nenndurchmesser betragen. Es reicht ein axialer Verfahrweg von kleiner 50 %, insbesondere 35 % bis 45 %, vorzugsweise 37 % bis 43 % und besonders bevorzugt 40 % des Nenndurchmessers (N) der Gliederkette (2) verschiebbar ist. Dennoch wird die Sicherungsleistung gegenüber aus dem Stand der Technik bekannten Sicherungsstiften verbessert.

Die Bedienung wird ebenfalls vereinfacht. Ein bedienbares Ende des Sicherungsstiftes ist hierzu bevorzugt in einer Vertiefung des Basiskörpers der Kettenverkürzungsklaue angeordnet. In Sicherungsstellung steht somit das bedienbare Ende nicht seitlich über den Basiskörper über und ist insbesondere gegenüber einer Außenseite in Richtung der Vertiefung versetzt gelagert. Ein versehentliches Betätigen des Sicherungsstiftes wird somit verhindert. Wird der Sicherungsstift nunmehr betätigt, kann dieser in die Vertiefung eingedrückt werden. Wird er eingedrückt, so ist bei Erreichen des bedienbaren Endes mit im Wesentlichen dem Grund der Vertiefung einem anwendenden Monteur signalisiert, dass der Sicherungsstift in der Montagestellung, also zum Einsetzen oder Entnehmen der Kettenglieder positioniert ist.

Damit der Sicherungsstift gleichzeitig zu der Axialbewegung die Rotationsbewegung ausführt, ist ferner eine Nut in dem Sicherungsstift vorgesehen. Die Nut verläuft radial abschnittsweise umlaufend und gleichzeitig in Axialrichtung und somit insgesamt gekrümmt in einer Außenmantelfläche des Sicherungsstiftes. Der Sicherungsstift wird in die Kettenverkürzungsklaue eingesetzt und es wird dann ein weiteres Sicherungsmittel, beispielsweise eine Kugel, seitlich in die Kettenverkürzungsklaue eingesetzt, die sodann formschlüssig in die Nut eingreift. Hierdurch ist zum einen der Sicherungsstift in der Kettenverkürzungsklaue gehalten. Gleichzeitig wird jedoch bei Ausführung einer Axialbewegung des Sicherungsstiftes durch den formschlüssigen Eingriff der Kugel in der Nut auch die Rotationsbewegung ausgeführt. Die Kugel verläuft also in der Nut und erzeugt dann bei Axialbewegung gleichzeitig die Rotationsbewegung des Sicherungsstiftes.

Weitere Vorteile, Merkmale, Eigenschaften und Aspekte der vorliegenden Erfindung sind Gegenstand der nachfolgenden Beschreibung. Bevorzugte Ausführungsvarianten sind in den schematischen Figuren dargestellt. Diese dienen dem einfachen Verständnis der Erfindung. Es zeigen:
- Figur 1a bis f: Die Kettenverkürzungsklaue mit eingesetzter Kette in Sicherungsstellung,
- Figur 2a bis f: die Kettenverkürzungsklaue in Montagestellung,
- Figur 3a bis f: den erfindungsgemäßen Sicherungsstift in verschiedenen Ansichten.

In den Figuren werden für gleiche oder ähnliche Bauteile dieselben Bezugszeichen verwendet, auch wenn eine wiederholte Beschreibung aus Vereinfachungsgründen entfällt.

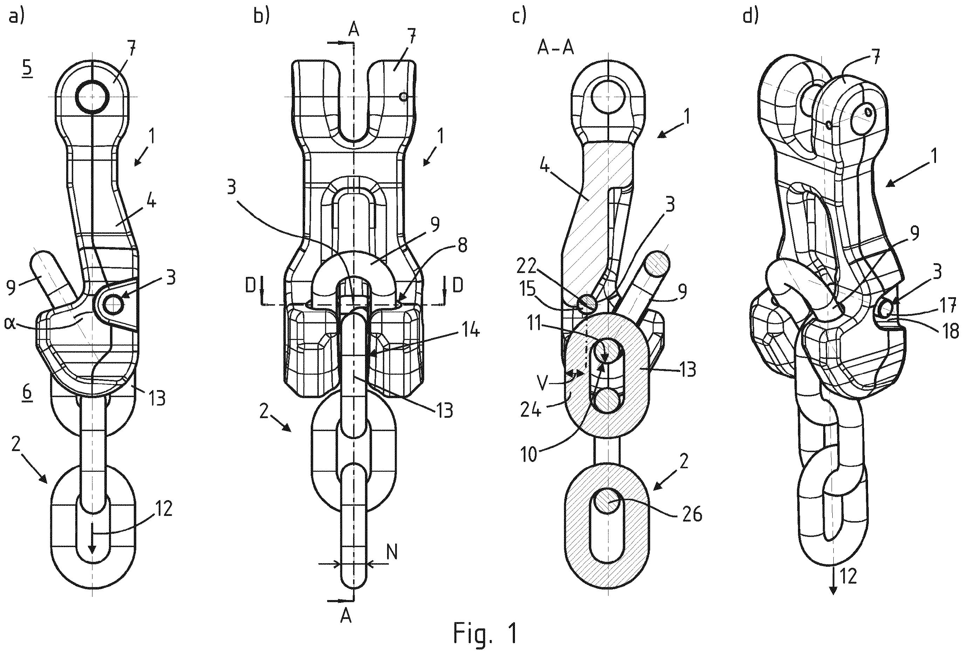

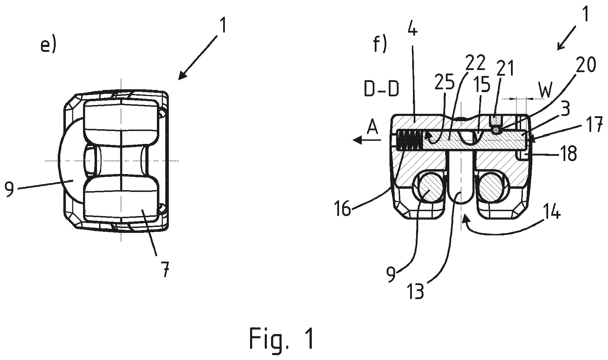

Figur 1a bis f zeigen die Kettenverkürzungsklaue 1 in verschiedenen perspektivischen und Schnittansichten. In die Kettenverkürzungsklaue 1 selbst ist jeweils eine Gliederkette 2 eingesetzt. Ein Sicherungsstift 3 in der Kettenverkürzungsklaue 1 befindet sich in Sicherungsstellung.

Die Kettenverkürzungsklaue 1 weist dazu einen länglichen Basiskörper 4 auf, der im Bereich eines oberen Endes 5 eine Koppelstelle 7 aufweist, so dass eine nicht näher dargestellte Kette oder sonstiges mit der Kettenverkürzungsklaue 1 gekoppelt werden können.

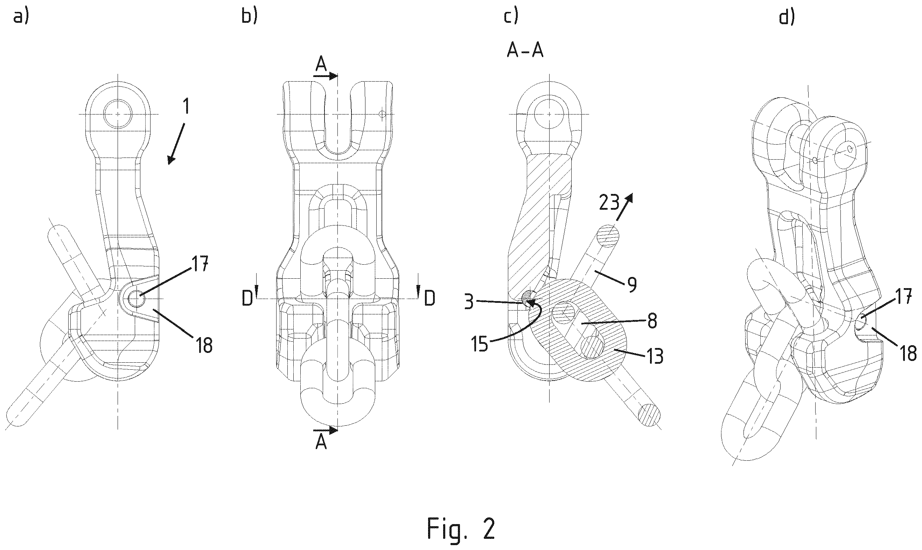

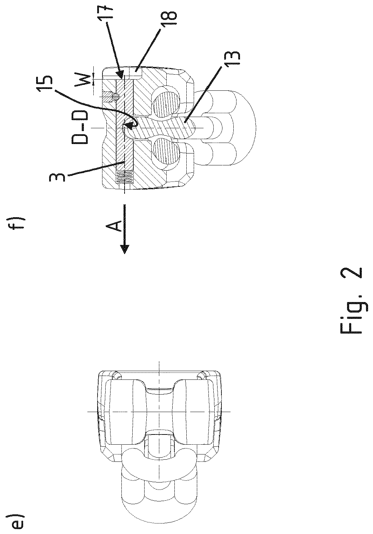

An einem unteren Ende 6 weist die Kettenverkürzungsklaue 1 eine Aufnahmetasche 8 auf, in welcher ein liegendes Kettenglied 9 mit seinem Bug 10 bzw. mit dem jeweils beidseitigen Bugabschnitt in einem Taschengrund 11 zur Anlage kommt. Die Aufnahmetasche 8 ist leicht seitlich zum Basiskörper 4 versetzt, so dass eine Einsetzbewegung der Gliederkette 2, dargestellt in den Figuren 2a bis f, ermöglicht wird. Ist jedoch die Sicherungsstellung erreicht, wie beispielsweise in Figur 1a dargestellt, so ist das liegende Kettenglied 9 in einem Winkel α bevorzugt größer als 5°, insbesondere größer als 10° und ganz besonders bevorzugt zwischen 10° und 30°, zum Basiskörper 4 angeordnet.

Das in Kettenlängsrichtung 12 auf das liegende Kettenglied 9 folgende stehende Kettenglied 13 ist in einem Schlitz 14 angeordnet. Das stehende Kettenglied 13 ist dabei von dem Sicherungsstift 3 übergriffen und somit die Gliederkette 2 in der Kettenverkürzungsklaue 1 gehalten. Eine Entnahme des liegenden Kettenglieds 9 entgegen der eingezeichneten Kettenlängsrichtung 12 wird somit verhindert.

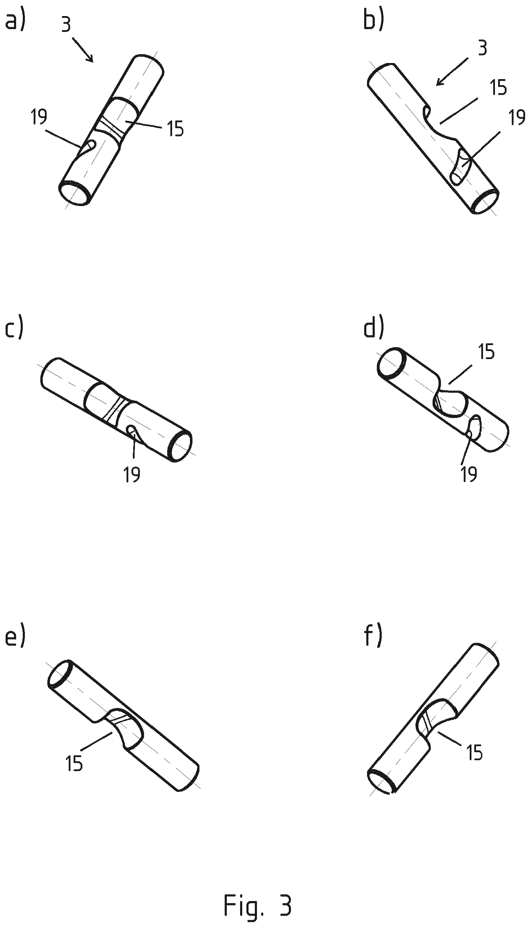

Der Sicherungsstift 3, welcher nochmals in Figur 3a bis f in verschiedenen Perspektiven dargestellt ist, weist eine Mulde 15 auf. Die Mulde 15 ist jedoch in der Figur 1a bis f gezeigten Sicherungsstellung von dem Schlitz 14 wegzeigend orientiert angeordnet. Das stehende Kettenglied 13 ist von dem Sicherungsstift 3 übergriffen und der Sicherungsstift 3 in beiden Seiten des Schlitzes 14 in einer Öffnung 25 in Axialrichtung A verschiebbar angeordnet. Eine hier dargestellte Feder 16 drückt den Sicherungsstift 3 entgegen der eingezeichneten Axialrichtung A in die Sicherungsstellung. Ein bedienbares Ende 17 des Sicherungsstiftes 3 ist in einer Vertiefung 18 angeordnet. Der Sicherungsstift 3 kann somit um den Weg W in Axialrichtung A entgegen der Federkraft der Feder 16 axial eingedrückt werden.

In dem Sicherungsstift 3 ist ferner eine Nut 19 angeordnet, was gut ersichtlich ist in Figur 3a bis f. Eine gemäß Figur 1f dargestellte Kugel 20 greift dabei formschlüssig in die Nut 19. Die Kugel 20 kann durch eine Madenschraube 21 in dem Basiskörper 4 gehalten sein. Wird nunmehr der Sicherungsstift 3 über das bedienbare Ende 17 in Axialrichtung A in die Öffnung 25 hineingedrückt, so führt der Sicherungsstift 3 eine Rotationsbewegung um seine Mittellängsachse 22 aus, aufgrund des formschlüssigen Eingriffs der Kugel 20 in die Nut 19. Es wird somit die in Figur 2a bis f dargestellte Montagestellung eingenommen. Das bedienbare Ende 17 ist vollständig in Axialrichtung A in die Vertiefung 18 hineingedrückt. Der Sicherungsstift 3 hat circa eine 90°-Drehung um seine Mittellängsachse 22 durchgeführt, so dass die Mulde 15 nunmehr über dem stehenden Kettenglied 13 angeordnet ist und das stehende Kettenglied 13 nicht mehr von dem Sicherungsstift 3 übergriffen ist. Das stehende Kettenglied 13 kann somit über den Schlitz 14 durch die Aufnahmetasche 8 mit dem zuvor in der Aufnahmetasche 8 aufgenommenen liegenden Kettenglied 9 in die Richtung 23 aus der Kettenverkürzungsklaue 1 herausgenommen werden.

Der Weg W mit dem der Sicherungsstift 3 in Axialrichtung A in die Öffnung hineingedrückt wird, ist bevorzugt größer als 10 % des Nenndurchmessers N der Gliederkette 2, besonders bevorzugt jedoch kleiner als 50 % des Nenndurchmessers N und beträgt insbesondere 40 % des Nenndurchmessers. Insbesondere aufgrund der Rotationsbewegung sowie der Mulde 15 in dem Sicherungsstift 3 muss gegenüber den aus dem Stand der Technik bekannten Sicherungsstiften 3 ein solcher um nicht mehr als das 1-fache des Nenndurchmessers N in Axialrichtung A verschoben werden, um ein darunter liegendes Kettenglied 9 freizugeben. Die Axialrichtung A des Sicherungsstiftes 3 liegt bevorzugt quer zur Kettenlängsrichtung 12. Gemäß Figur 1c ist dargestellt, dass die Mittellängsachse 22 des Sicherungsstiftes 3, bezogen auf die Mittelquerschnittsebene 26 des stehenden Kettengliedes 13, um mehr als 50 % des Nenndurchmessers N mit einem Versatz V den Schenkel 24 des stehenden Kettengliedes 13 übergreift.

### Bezugszeichen:

- 1 -: Kettenverkürzungsklaue
- 2 -: Gliederkette
- 3 -: Sicherungsstift
- 4 -: Basiskörper
- 5 -: Oberes Ende zu 4
- 6 -: Unteres Ende zu 4
- 7 -: Koppelstelle
- 8 -: Aufnahmetasche
- 9 -: Liegendes Kettenglied
- 10 -: Bug
- 11 -: Taschengrund
- 12 -: Kettenlängsrichtung
- 13 -: Stehendes Kettenglied
- 14 -: Schlitz
- 15 -: Mulde
- 16 -: Feder
- 17 -: Bedienbares Ende zu 3
- 18-: Vertiefung
- 19 -: Nut zu 3
- 20 -: Kugel
- 21 -: Madenschraube
- 22 -: Mittellängsachse zu 3
- 23 -: Richtung
- 24 -: Schenkel
- 25 -: Öffnung
- 26 -: Mittelquerschnittsebene

- α -: Winkel
- W -: Weg
- N -: Nenndurchmesser zu 2
- A -: Axialrichtung
- V -: Versatz

## Patentansprüche

1. Kettenverkürzungselement für eine Gliederkette (2), insbesondere Kettenverkürzungsklaue (1), aufweisend einen Basiskörper (4) mit einer geschlitzten Aufnahmetasche (8), in welcher ein liegendes Kettenglied (9) einsetzbar ist, dergestalt, dass das liegende Kettenglied (9) mit seinem Bug (10) in der Aufnahmetasche (8) zur Anlage kommen kann und dass ein in Kettenlängsrichtung (12) stehendes Kettenglied (13) in einem einseitig offenen Schlitz (14) der Aufnahmetasche (8) anordbar ist und dass bevorzugt der Basiskörper (4) auf der der Aufnahmetasche (8) gegenüberliegenden Seite eine Koppelstelle (7) oder eine zweite Aufnahmetasche (8) aufweist, **dadurch gekennzeichnet, dass** das stehende Kettenglied (13) von einem Sicherungsstift (3) übergreifbar ist und der Sicherungsstift (3) reversibel entgegen einer Federkraft verlagerbar ist, wobei der Sicherungsstift (3) bei Ausführen einer Axialbewegung auch eine Rotationsbewegung ausführt und dadurch eine in dem Sicherungsstift (3) ausgebildete Mulde (15) über den Schlitz (14) positioniert wird, dergestalt, dass das stehende Kettenglied (13) aus dem Schlitz (14) ziehbar ist oder in den Schlitz (14) einführbar ist.

2. Kettenverkürzungselement, insbesondere Kettenverkürzungsklaue (1) nach Anspruch 1, **dadurch gekennzeichnet, dass** der Sicherungsstift (3) in eine Axialrichtung (A) verlagerbar ist, die quer zur Kettenlängsrichtung (12) liegt.

3. Kettenverkürzungselement, insbesondere Kettenverkürzungsklaue (1) nach den Ansprüchen 1 oder 2, **dadurch gekennzeichnet, dass** der Sicherungsstift (3) seitlich des Basiskörpers (4) bedienbar ist.

4. Kettenverkürzungselement, insbesondere Kettenverkürzungsklaue (1) nach einem der Ansprüche 1 bis 3, **dadurch gekennzeichnet, dass** ein bedienbares Ende (17) des Sicherungsstiftes (3) in einer Vertiefung (18) des Basiskörpers (4) angeordnet ist.

5. Kettenverkürzungselement, insbesondere Kettenverkürzungsklaue (1) nach einem der Ansprüche 1 bis 4, **dadurch gekennzeichnet, dass** die Mulde (15) des Sicherungsstiftes (3) in Sicherungsstellung um mehr als 50°, bevorzugt um 90° rotiert ist, bezogen auf eine Montagestellung.

6. Kettenverkürzungselement, insbesondere Kettenverkürzungsklaue (1) nach einem der Ansprüche 1 bis 5, **dadurch gekennzeichnet, dass** die Mulde (15) des Sicherungsstiftes (3) in Sicherungsstellung in Axialrichtung (A) um mehr als 10 % des Nenndurchmessers (N) des Kettengliedes versetzt gelagert ist.

7. Kettenverkürzungselement, insbesondere Kettenverkürzungsklaue (1) nach einem der Ansprüche 1 bis 6, **dadurch gekennzeichnet, dass** der Sicherungsstift (3) eine Nut (19) aufweist, die einen gekrümmten Verlauf aufweist, wobei in die Nut (19) eine Kugel (20) eingreift, dergestalt, dass bei Axialbewegung des Sicherungsstiftes (3) aufgrund des Eingriffes von Kugel (20) und Nut (19) eine rotatorische Bewegung des Sicherungsstiftes (3) erzeugt wird.

8. Kettenverkürzungselement, insbesondere Kettenverkürzungsklaue (1) nach einem der Ansprüche 1 bis 7, **dadurch gekennzeichnet, dass** das liegende Kettenglied (9) seitlich in die Aufnahmetasche (8) einsetzbar ist und in der aufgenommenen Stellung in einem Winkel (a) von mehr als 5°, bevorzugt mehr als 10° zur Kettenlängsrichtung (12) angeordnet ist.

9. Kettenverkürzungselement, insbesondere Kettenverkürzungsklaue (1) nach einem der Ansprüche 1 bis 8, **dadurch gekennzeichnet, dass** der Sicherungsstift (3) in Axialrichtung (A) um mehr als 30 % und weniger als50 %, inbesondere 35 % bis 45 %, vorzugsweise 37 % bis 43 % und besonders bevorzugt 40 % des Nenndurchmessers (N) der Gliederkette (2) verschiebbar ist.

## Claims

1. Chain shortening element for a link chain (2), particularly chain shortening blade (1), having a basic body (4) with a slotted receiving pocket (8) in which a lying chain-link (9) can be inserted, such that the lying chain-link (9) can come to rest in the receiving pocket (8) with its nose (10) and that a chain-link (13) standing in chain longitudinal direction (12) can be arranged in a slot (14) of the receiving pocket (8) which is open on one side, and that preferably the basic body (4) has a coupling point (7) or a second receiving pocket (8) on the opposite side of the receiving pocket (8), **characterised in that** the standing chain-link (13) can be gripped over by a securing pin (3) and the securing pin (3) can be displaced reversibly against a spring force, wherein, when an axial movement is carried out, the securing pin (3) carries out also a rotational movement and thereby a depression (15) formed in the securing pin (3) is positioned over the slot (14) such that the standing chain-link (13) can be drawn out of the slot (14) or can be introduced into the slot (14).

2. Chain shortening element, particularly chain shortening blade (1) according to claim 1, **characterised in that** the securing pin (3) can be displaced in an axial direction (A) which is transverse to the chain longitudinal direction (12).

3. Chain shortening element, particularly chain shortening blade (1) according to claims 1 or 2, **characterised in that** the securing pin (3) can be actuated laterally to the basic body (4).

4. Chain shortening element, particularly chain shortening blade (1) according to any of claims 1 to 3, **characterised in that** an actuatable end (17) of the securing pin (3) is arranged in an indentation (18) of the basic body (4).

5. Chain shortening element, particularly chain shortening blade (1) according to any of claims 1 to 4, **characterised in that** the suppression (15) of the securing pin (3) in the securing position is rotated by more than 50°, preferably by 90°, with respect to a mounting position.

6. Chain shortening element, particularly chain shortening blade (1) according to any of claims 1 to 5, **characterised in that** the depression (15) of the securing pin (3) in the securing position is mounted offset in axial direction (A) by more than 10% of the nominal diameter (N) of the chain-link.

7. Chain shortening element, particularly chain shortening blade (1) according to any of claims 1 to 6, **characterised in that** the securing pin (3) has a groove (19) which has a curved course, wherein a sphere (20) engages in the groove (19) such that in the case of axial movement of the securing pin (3), a rotatory movement of the securing pin (3) is generated for reasons of the engagement of sphere (20) and groove (19).

8. Chain shortening element, particularly chain shortening blade (1) according to any of claims 1 to 7, **characterised in that** the lying chain-link (9) can be inserted laterally into the receiving pocket (8) and in the received position is arranged at an angle (α) of more than 5°, preferably more than 10° to the chain longitudinal direction (12).

9. Chain shortening element, particularly chain shortening blade (1) according to any of claims 1 to 8, **characterised in that** the securing pin (3) is displaceable in axial direction (A) by more than 30% and less than 50%, in particular 35% to 45%, preferably 37% to 43% and especially preferably 40% of the nominal diameter (N) of the link chain (2).

## Revendications

1. Élément de raccourcissement de chaîne pour une chaîne à maillons (2), en particulier mâchoire de raccourcissement de chaîne (1), présentant un corps de base (4) avec une poche de réception (8) fendue, dans laquelle un maillon de chaîne (9) horizontal peut être inséré de telle manière que le maillon de chaîne (9) horizontal puisse venir en appui avec sa partie avant (10) dans la poche de réception (8) et qu'un maillon de chaîne (13) vertical dans le sens longitudinal de la chaîne (12) puisse être agencé dans une fente (14) ouverte d'un côté de la poche de réception (8) et que de préférence le corps de base (4) présente sur le côté opposé à la poche de réception (8) un point de couplage (7) ou une seconde poche de réception (8), **caractérisé en ce que** le maillon de chaîne (13) vertical peut être recouvert par une goupille de sécurité (3) et la goupille de sécurité (3) peut être déplacée de manière réversible dans le sens inverse à une force de ressort, dans lequel la goupille de sécurité (3) réalise aussi un mouvement de rotation lors de la réalisation d'un mouvement axial et ainsi une cavité (15) réalisée dans la goupille de sécurité (3) est positionnée au-dessus de la fente (14) de telle manière que le maillon de chaîne (13) vertical puisse être retiré de la fente (14) ou puisse être introduit dans la fente (14).

2. Élément de raccourcissement de chaîne, en particulier mâchoire de raccourcissement de chaîne (1) selon la revendication 1, **caractérisé en ce que** la goupille de sécurité (3) peut être déplacée dans un sens axial (A) qui se trouve transversalement au sens longitudinal de chaîne (12).

3. Élément de raccourcissement de chaîne, en particulier mâchoire de raccourcissement de chaîne (1) selon les revendications 1 ou 2, **caractérisé en ce que** la goupille de sécurité (3) peut être commandée latéralement du corps de base (4).

4. Élément de raccourcissement de chaîne, en particulier mâchoire de raccourcissement de chaîne (1) selon l'une quelconque des revendications 1 à 3, **caractérisé en ce qu'**une extrémité (17) commandable de la goupille de sécurité (3) est agencée dans un évidement (18) du corps de base (4).

5. Élément de raccourcissement de chaîne, en particulier mâchoire de raccourcissement de chaîne (1) selon l'une quelconque des revendications 1 à 4, **caractérisé en ce que** la cavité (15) de la goupille de sécurité (3) en position de sécurité est tournée de plus de 50°, de préférence de 90°, par rapport à une position de montage.

6. Élément de raccourcissement de chaîne, en particulier mâchoire de raccourcissement de chaîne (1) selon l'une quelconque des revendications 1 à 5, **caractérisé en ce que** la cavité (15) de la goupille de sécurité (3) en position de sécurité est logée en déport dans le sens axial (A) de plus de 10 % du diamètre nominal (N) du maillon de chaîne.

7. Élément de raccourcissement de chaîne, en particulier mâchoire de raccourcissement de chaîne (1) selon l'une quelconque des revendications 1 à 6, **caractérisé en ce que** la goupille de sécurité (3) présente une rainure (19) qui présente une étendue courbée, dans lequel une bille (20) vient en prise dans la rainure (19) de telle manière que lors du mouvement axial de la goupille de sécurité (3) en raison de la prise de la bille (20) et de la rainure (19), un mouvement rotatif de la goupille de sécurité (3) soit généré.

8. Élément de raccourcissement de chaîne, en particulier mâchoire de raccourcissement de chaîne (1) selon l'une quelconque des revendications 1 à 7, **caractérisé en ce que** le maillon de chaîne (9) horizontal peut être inséré latéralement dans la poche de réception (8) et est agencé dans la position reçue dans un angle (a) de plus de 5°, de préférence plus de 10° par rapport au sens longitudinal de chaîne (12).

9. Élément de raccourcissement de chaîne, en particulier mâchoire de raccourcissement de chaîne (1) selon l'une quelconque des revendications 1 à 8, **caractérisé en ce que** la goupille de sécurité (3) est coulissante dans le sens axial (A) de plus de 30 % et moins de 50 %, en particulier de 35 % à 45 %, de préférence de 37 % à 43 % et de manière particulièrement préférée de 40 % du diamètre nominal (N) de la chaîne à maillons (2).
